# EUROPÄISCHE PATENTSCHRIFT

(11) **EP 4 187 224 B1**
(45) Veröffentlichungstag und Bekanntmachung des Hinweises auf die Patenterteilung: **19.03.2025**
(21) Anmeldenummer: 22208318.0
(22) Anmeldetag: 18.11.2022
(51) Int. Cl.: G01M 13/003, G01M 3/28, G01M 9/08

(54) **VERFAHREN UND SYSTEM ZUR LEBENSDAUERANALYSE EINES FELDGERÄTES, DAS VON EINEM FLUID DURCHSTRÖMT WIRD, WOBEI DAS FLUID FESTSTOFFPARTIKEL MIT SICH FÜHRT**
METHOD AND SYSTEM FOR ANALYSING THE LIFETIME OF A FIELD DEVICE THROUGH WHICH A FLUID FLOWS, SAID FLUID CARRIES SOLID PARTICLES
PROCÉDÉ ET SYSTÈME D'ANALYSE DE DURÉE DE VIE D'UN APPAREIL DE TERRAIN TRAVERSÉ PAR UN FLUIDE PAR LES PARTICULES SOLIDES FLUIDIQUES

(30) Priorität: 24.11.2021 DE 102021130744
(43) Veröffentlichungstag der Anmeldung: 31.05.2023
(73) Patentinhaber: Samson Aktiengesellschaft, 60314 Frankfurt am Main (DE)
(72) Erfinder: Wagner-Stürz, David, 64367 Mühltal (DE); Wetzstein, Nadine, 60594 Textorstr. 62 (DE)
(74) Vertreter: Köllner, Malte

(56) Entgegenhaltungen:
- CN-A- 112 014 255
- CN-A- 113 567 108
- US-B2- 6 837 681
- M.A VERSPUI ET AL: "Simulation model for the erosion of brittle materials", WEAR, vol. 233-235, 29 December 1999 (1999-12-29), CH, pages 436 - 443, XP055477480, ISSN: 0043-1648, DOI: 10.1016/S0043-1648(99)00180-5

## Beschreibung

### Gebiet der Erfindung

Die Erfindung betrifft ein Verfahren und ein System zur Lebensdaueranalyse eines Feldgerätes, das von einem Fluid durchströmt wird, wobei das Fluid Feststoffpartikel mit sich führt.

Das Verhalten von im Fluid mitgeführten Partikeln, z.B. Fremdkörpern, kann entscheidend zum Verschleiß in Feldgeräten beitragen. Daher ist es wünschenswert, dieses Verhalten bei der Bewertung der Lebensdauer oder bei der Festlegung der vorgesehenen Wartungszyklen von Feldgeräten zu berücksichtigen.

Bei Prozessen mit einem hohen Anteil von Sauerstoff im Fluid müssen zudem mögliche Zündprozesse in den verbauten Feldgeräten (z.B. Ventilen) berücksichtigt werden. Insbesondere Dichtungen, die z.B. aus PTFE gefertigt sein können, sind in einer konzentrierten Sauerstoffatmosphäre leicht entflammbar. Je nach Sauerstoffanteil und Prozessbedingungen sind davon aber auch metallische Bauteile betroffen.

Partikeleinschläge spielen hier in nicht hochreinen Medien eine entscheidende Rolle. Der Zündmechanismus besteht dabei darin, dass sich Partikel oder beispielsweise Ventilbauteile lokal, d.h. am Einschlagpunkt, so stark erwärmen, dass es zur Zündung kommt. Neben der Partikelgeschwindigkeit und -größe spielen hier auch Bauteileigenschaften wie Wärmeleitung im Werkstoff und Wanddicke eine entscheidende Rolle.

Die European Industrial Gases Association (EIGA) hat speziell für diesen Mechanismus Prozessgrenzen festgelegt, deren Einhaltung eine Zündung verhindern sollen. Abhängig vom Mediumsdruck ist eine zulässige lokale Strömungsgeschwindigkeit definiert. Wenn diese Grenze eingehalten wird, kann z.B. Edelstahl als Werkstoff für das Feldgerät verwendet werden, ansonsten muss ein zugelassener Exempt-Werkstoff eingesetzt werden (z.B. Monel). Eine genauere Bewertung des Verhaltens von Feststoffpartikeln im Fluid wäre hierbei also besonders hilfreich.

### Stand der Technik

In den Veröffentlichungen EP 2 812 613 B1 und EP 2 898 241 B1 sind Verfahren und Vorrichtungen zur Zustandsbeurteilung bzw. Schätzung der Nutzungsdauer von Dichtungen beschrieben, bei EP 2 898 214 B1 speziell bezogen auf Drehventile. Der Schwerpunkt liegt hierbei allerdings auf dem Einfluss von Bewegungen im Rahmen von Betriebszyklen, z.B. dem Öffnen und Schließen eines Ventils. Eigenschaften eines durchströmenden Fluids, und hierbei insbesondere der Einfluss von im Fluid mitgeführten Feststoffpartikeln, werden nicht berücksichtigt.

Aus der Veröffentlichung EP 3 889 553 A1 sind ein Verfahren zum Detektieren von Kavitation an einem Regelelement mittels Ultraschall sowie eine entsprechende Vorrichtung bekannt. Kavitation kann zu einer zunehmenden Beschädigung der Oberfläche beispielsweise eines Ventilkegels, eines Ventilsitzes oder benachbarter Bereiche führen. Auf Partikel im das Regelelement durchströmenden Fluid wird jedoch nicht eingegangen.

Die Veröffentlichung DE 10 2017 101 567 A1 beschreibt ein Verfahren zum Simulieren eines Auftreffens von Partikeln oder Strahlung auf einem gegenständlichen Objekt. Die Simulation verwendet eine Verteilungsfunktion eines Auftreffortes und/oder einer Geschwindigkeit der individuellen Partikel bzw. Strahlungseinheiten. Solche Simulationsverfahren finden beispielsweise Anwendung bei der Voraussage von möglichen Schäden, Abrasion, Anlagerung von Materie und/oder sonstiger Konsequenzen einer Beaufschlagung eines solchen Objektes mit Partikeln oder Strahlung.

Die Veröffentlichung US 2020/0386652 A1 zeigt ein Verfahren zur Erkennung kritischer Schwingungszustände in Fluidregelsystemen anhand unterschiedlicher Prozessparameter. Hierbei wird unter anderen auch ein Partikel-Simulationsverfahren (*Particle Image Velocimetry*) verwendet. Zur Erfassung der Partikel dienen hierbei Hochgeschwindigkeitskameras.

In der Veröffentlichung DE 10 2016 205 454 A1 werden ein Verfahren zur Ermittlung und/oder Vorhersage des betriebsbedingten Zustandes wenigstens eines Einströmventils einer Dampfturbine sowie ein Verfahren zum Betreiben einer Anlage mit einer Dampfturbine beschrieben. Insbesondere wird bei dem Verfahren auch eine zu erwartende Lebensdauer des Einströmventils ermittelt. Referenzdaten für das Verfahren können durch Simulationen, die auf numerischer Strömungsmechanik und/oder der Finite-Elemente-Methode basieren, erstellt werden.

Die Veröffentlichung DE 10 2018 218 360 A1 offenbart ein System sowie ein entsprechendes Verfahren zur Erfassung von Partikeleinschlägen an einem Probenkörper. Durch das System ist eine Registrierung sowohl der Stärke der Einschlagimpulse als auch des jeweiligen Einschlagortes möglich, wodurch die Zuordnung der Partikeleinschläge zu erosiven Folgen für den Probenkörper verbessert werden soll. Dies soll bei insgesamt vertretbarem Aufwand möglich sein.

Die Veröffentlichungen CN 113 567 108 A, CN 112 014 255 A, US 6 837 681 B2 und M.A. VERSPUI ET AL.: "Simulation model for the erosion of brittle materials", WEAR, Bd. 233-235, 29. Dezember 1999 (1999-12-29), Seiten 436-443 offenbaren Beispiele von Systemen zur Messung und Auswertung von Verschleiß eines Geräts.

### Aufgabe

Aufgabe der Erfindung ist es, ein Verfahren und ein System anzugeben, das den Einfluss von Feststoffpartikeln im Fluid auf die Lebensdauer bzw. den Verschleiß von Feldgeräten besser berücksichtigt.

### Lösung

Diese Aufgabe wird durch die Gegenstände der unabhängigen Ansprüche gelöst. Vorteilhafte Weiterbildungen der Gegenstände der unabhängigen Ansprüche sind in den Unteransprüchen gekennzeichnet. Der Wortlaut sämtlicher Ansprüche wird hiermit durch Bezugnahme zum Inhalt dieser Beschreibung gemacht.

Die Verwendung der Einzahl soll die Mehrzahl nicht ausschließen, was auch im umgekehrten Sinn zu gelten hat, soweit nichts Gegenteiliges offenbart ist.

Im Folgenden werden einzelne Verfahrensschritte näher beschrieben. Die Schritte werden in einer bevorzugten Variante der Erfindung in der angegebenen Reihenfolge ausgeführt. Die Schritte müssen aber nicht notwendigerweise in der angegebenen Reihenfolge durchgeführt werden, und das zu schildernde Verfahren kann auch weitere, nicht genannte Schritte aufweisen.

Zur Lösung der Aufgabe wird ein Verfahren zur Lebensdaueranalyse eines Feldgerätes vorgeschlagen. Das Feldgerät wird von einem Fluid durchströmt, wobei das Fluid Feststoffpartikel, z.B. Verunreinigungen, Abrieb o.ä. mit sich führt. Das Verfahren weist die folgenden Schritte auf:
- Bestimmen von Durchflussmenge (d.h. die Anzahl pro Zeiteinheit) und Geschwindigkeiten der Feststoffpartikel. Dies kann beispielsweise mit geeigneten Sensormitteln vorgenommen werden, die nicht notwendigerweise direkt am oder im Feldgerät angeordnet sein müssen.
- Bestimmen der Geschwindigkeiten der Feststoffpartikel zumindest teilweise mittels numerischer Strömungsmechanik. Hierbei wird numerisch ermittelt, wie die Strömung des Fluids die mitgeführten Feststoffpartikel zu den Innenwandungen des Feldgerätes führt, und welche Geschwindigkeit sie an diesen Stellen hätten. Falls notwendig, werden hierbei über Masse und Größe der Feststoffpartikel vereinfachende Annahmen gemacht. Im einfachsten Fall können z.B. Punktteilchen mit einer fest vorgegebenen Masse betrachtet werden.
- Berechnen von Einschlagenergien der Feststoffpartikel auf ein Teil des Feldgeräts aus ihren bestimmten Geschwindigkeiten.
- Ermitteln einer Prognose für die Lebensdauer und/oder den Verschleiß des Feldgerätes. Dabei wird zum Ermitteln der Prognose ein digitales Modell zur Vorhersage des Verschleißes am Feldgerät genutzt. Dieses Modell berücksichtigt die berechneten Einschlagenergien der Feststoffpartikel. So kann bei höheren Einschlagenergien ein höherer Verschleiß angesetzt werden. Dies kann sowohl das erwartete räumliche Vorkommen von Verschleißerscheinungen betreffen, d.h. welche Komponenten des Feldgerätes besonders von Abnutzung betroffen sind, als auch z.B. wie der Verschleiß von der Durchströmgeschwindigkeit des Fluids abhängt. Bei niedrigeren Einschlagenergien kann z.B. auch berücksichtigt werden, dass sich Feststoffpartikel ggf. anlagern. Das Modell kann beispielsweise mittels Extrapolation eine Prognose liefern, wann eine Wartung und/oder ein Austausch von Komponenten des Feldgerätes erforderlich sein könnten, um weiterhin einen störungsfreien Betrieb zu ermöglichen. In einer Variante werden die Annahmen im Modell so gewählt, dass das Modell einen etwas schnelleren Verschleiß ergibt, als in der Realität eintritt, um einen Sicherheitspuffer zu haben.
- Ausgeben der ermittelten Prognose für die Lebensdauer und/oder den Verschleiß des Feldgerätes. Dies kann z.B. mittels einer Anzeige auf einem Display erfolgen, oder auch in Form einer schriftlichen Mitteilung, die z.B. als Email, SMS oder beliebige andere Textnachricht an eine verantwortliche Person gesandt werden kann, oder an z.B. einen Drucker geschickt werden kann. Ggf. können auch automatisch Termine für eine Wartung angesetzt werden.

Mit diesem Verfahren kann besser berücksichtigt werden, in welcher Weise sich im Fluid mitgeführte Feststoffpartikel auf den Verschleiß bzw. die Lebensdauer eines Feldgerätes auswirken. Insbesondere wird auch berücksichtigt, wie sich Änderungen des Gehalts an Feststoffpartikeln sowie Änderungen der Fluidströmung auswirken. Dadurch ergeben sich zuverlässigere Einschätzungen über erforderliche Wartungsmaßnahmen, wodurch Kosten gespart werden können und z.B. ein unterbrechungsfreier Betrieb leichter ermöglicht werden kann.

Dokumentation und weitere Verarbeitung der Ergebnisse werden erleichtert, wenn das Verfahren den weiteren Schritt des Erstellens eines Datenträgers aufweist, wobei auf dem Datenträger die Prognose für die Lebensdauer und/oder den Verschleiß des Feldgerätes und/oder Parameter des Modells gespeichert sind.

Verschiedene Arten von Verschleiß lassen sich berücksichtigen, wenn die Durchflussmenge und Geschwindigkeiten der Feststoffpartikel sowohl stromaufwärts als stromabwärts des Feldgerätes gemessen werden, wobei die stromaufwärts und stromabwärts bestimmten Durchflussmengen miteinander verglichen werden.

In Folge der Messung liegen Randbedingungen für die numerische Strömungsmechanik vor, die für die detaillierte Berechnung der Geschwindigkeit der Feststoffpartikel auf ihrem Weg durch das Feldgerät genutzt werden können. Als Ergebnis der Berechnung der Geschwindigkeiten ist die Geschwindigkeit der Partikel nicht nur vor und nach dem Feldgerät bekannt, sondern auch in einzelnen Bereichen innerhalb des Feldgeräts.

Dabei berücksichtigt das Modell zur Vorhersage des Verschleißes am Feldgerät Materialablagerungen im Feldgerät, wenn die stromabwärts des Feldgerätes bestimmte Durchflussmenge an Feststoffpartikeln kleiner als die stromaufwärts bestimmte Durchflussmenge an Feststoffpartikeln ist. Das Modell zur Vorhersage des Verschleißes am Feldgerät berücksichtigt einen Materialabtrag im Feldgerät, wenn die stromabwärts des Feldgerätes bestimmte Durchflussmenge an Feststoffpartikeln größer als die stromaufwärts bestimmte Durchflussmenge an Feststoffpartikeln ist. Die Bestimmung der Durchflussmengen und Geschwindigkeiten der Feststoffpartikel im Fluid kann dabei sinnvollerweise im Zulauf bzw. Einlassbereich sowie im Ablauf bzw. Auslassbereich des Feldgerätes erfolgen.

Die prognostizierte Lebensdauer des Feldgeräts wird genauer, wenn das Modell zusätzlich Größe und/oder Oberflächeneigenschaften und/oder Zusammensetzung der Feststoffpartikel berücksichtigt. So können Art der Partikel, ihre Zusammensetzung, d.h. das Material, aus dem sie bestehen, und insbesondere Eigenschaften wie Härte des Materials und die Partikelform eine Rolle bei der Wechselwirkung zwischen Partikel und Feldgerät spielen. Härtere Partikel mit einer eher scharfkantigen Form bewirken z.B. eher einen Materialabtrag als weichere oder sprödere Partikel oder Partikel mit einer eher abgerundeten Form. Das Material der Partikel beeinflusst über ihre Dichte die Einschlagenergie.

Daten hierzu können z.B. auch aus Laboruntersuchungen oder anderen externen Quellen stammen.

Die Vorhersagen über die Lebensdauer des Feldgerätes werden weiter verbessert, wenn das Modell zusätzlich Einschlagwinkel und/oder Einschlagort der Feststoffpartikel berücksichtigt. Diese Informationen werden aus der numerischen Strömungssimulation gewonnen. Ist die Strömungssimulation aufwändig und genau genug, und die Recheneinheit hinreichend leistungsfähig, lassen sich ggf. sogar Wirkungen von Turbulenzen berücksichtigen.

Diese Berücksichtigung von Einschlagwinkel und/oder Einschlagort ist besonders vorteilhaft, wenn das Fluid sauerstoffhaltig ist. Dann kann auf diese Weise überwacht werden, dass an keiner Stelle des Feldgerätes zu hohe Einschlagenergien auftreten, die möglicherweise zum Erreichen einer Zündtemperatur führen könnten. Dies ist genauer und sicherer, als wenn nur die Strömungsgeschwindigkeit des Fluids überwacht würde.

Vorzugsweise berücksichtigt das Modell zusätzlich Oberflächeneigenschaften der Komponenten im Inneren des Feldgerätes, insbesondere Werkstoff und Härte. Diese haben erheblichen Einfluss auf die Wirkung von Partikeleinschlägen.

Werden stromaufwärts und stromabwärts des Feldgerätes Drucksensoren bereitgestellt und berücksichtigt das Modell zusätzlich den Druck des Fluids, insbesondere einen Druckabfall beim Durchfluss durch das Feldgerät, so kann daraus eine Korrektur für den Partikelabtrag bzw. die Partikelablagerungen bestimmt werden. Je größer die Partikelablagerung im Feldgerät ist, desto höher wird auch die Druckdifferenz zwischen den stromaufwärts und stromabwärts angeordneten Drucksensoren.

Weiterhin wird bevorzugt, dass ein Temperatursensor zur Messung der Temperatur des Fluids bereitgestellt wird. Das Modell berücksichtigt zusätzlich Temperatur und/oder Viskosität und/oder weitere Kenndaten des Fluids. Auch dies erhöht die Genauigkeit der Prognosen über die Lebensdauer des Feldgerätes, da berücksichtigt wird, dass die meisten Reaktionen, die z.B. zu erhöhtem Verschleiß führen, bei erhöhter Temperatur verstärkt ablaufen. Je nach Fluid kann aber auch umgekehrt gelten, dass bei geringerer Temperatur sich der Feststoffanteil erhöht, z.B. weil die Gefriertemperatur von Fluidbestandteilen erreicht wird.

Vorzugsweise berücksichtigt das Modell eine räumliche Gestalt des Feldgerätes, z.B. in Form von CAD-Daten und/oder digitalen Bauplänen, um die wahrscheinlichsten Stellen des Feldgerätes, an denen sich Ablagerungen bilden können, zu ermitteln. Dadurch kann eine möglichst hohe Genauigkeit der Bestimmung dieser Stellen erreicht werden, da die genaue Form und Größe sämtlicher betrachteten Teile des Feldgerätes zur Verfügung stehen. Insbesondere ist die genaue Anordnung der Innenoberflächen des Feldgerätes bekannt.

Besonders bevorzugt wird bei dem unmittelbar vorgenannten Verfahren, dass das Modell aus dem zeitlichen Verlauf der Durchflussmenge und der berechneten Einschlagenergien der Feststoffpartikel Materialabtrag oder -ablagerung im Feldgerät berechnet. Änderungen der räumlichen Gestalt des Feldgeräts, die sich aus dem berechneten Materialabtrag oder der berechneten Materialablagerung ergeben, werden anschließend bei der Strömungssimulation berücksichtigt. Mit der veränderten räumlichen Gestalt wird sich eine andere Strömung, insbesondere andere Partikelverteilung einstellen. Dadurch erhält man ein rückgekoppeltes System. Dieses passt sich an veränderliche Bedingungen an und liefert somit eine im Laufe der Zeit genauer werdende Prognose über die Lebensdauer des Feldgerätes.

Eine noch genauere Vorhersage der Lebensdauer des Feldgerätes lässt sich erreichen, wenn der Verschleiß durch Einschlag und/oder Anlagerung und/oder Abtrag von Feststoffpartikeln im Feldgerät mittels Finite-Elemente-Methode simuliert wird.

Komplexere Interaktionen, sowie ggf. unbekannte Beziehungen, zwischen den verschiedenen Parametern lassen sich berücksichtigen, wenn das Verfahren die folgenden zusätzlichen Schritte umfasst:
- Daten des Fluids und/oder Umweltdaten werden korreliert.
- Die Korrelationen werden statistisch ausgewertet.
- Aus der statistischen Auswertung wird ein momentaner Auftrag oder Abtrag von Feststoffpartikeln berechnet.
- Aus dem momentanen Auftrag oder Abtrag von Feststoffpartikeln wird eine Prognose für die Lebensdauer und/oder den Verschleiß des Feldgerätes generiert.

Ein Beispiel hierfür kann sein, dass eine hohe Temperatur in der Umwelt sich in das Innere des Feldgeräts überträgt. Die Temperatur beeinflusst die Partikelbeladung bzw. die Ballung von Partikeln im Fluid. Somit wird die Partikelströmung selbst beeinflusst. Geschwindigkeit, Einschlagwinkel und Einschlagort verändern sich aufgrund der Temperaturänderung.

Der laufend benötigte Rechenaufwand kann reduziert werden, indem aus einer Mehrzahl von Simulationsergebnissen für die Strömung der Feststoffpartikel durch das Feldgerät und der zugehörigen Bedingungen (z.B. Durchflussmenge und Geschwindigkeiten der Feststoffpartikel) stromaufwärts und stromabwärts des Feldgeräts eine Sammlung aufgebaut wird. Zu vorgefundenen Bedingungen stromaufwärts und stromabwärts des Feldgeräts wird die Strömung der Feststoffpartikel durch das Feldgerät dadurch erhalten, dass ein Simulationsergebnis zu innerhalb einer vorgegebenen Toleranz übereinstimmenden Bedingungen aus der Sammlung herangezogen wird. Ergebnisse für die jeweils momentan vorliegende Situation am Feldgerät können im weiteren Verlauf durch Vergleich mit den bereits vorliegenden Ergebnissen und ggf. Interpolation dazwischen oder Extrapolation davon erhalten werden, was einen deutlich geringeren Rechenaufwand erfordert, als wenn für jede momentane Situation eine komplette Simulation mittels numerischer Strömungsmechanik erforderlich wird.

Aufbauend auf einer Mehrzahl fertig berechneter Simulationsergebnisse für die Strömung der Feststoffpartikel kann ein vereinfachtes parametrisiertes Modell für die Strömung der Feststoffpartikel im Feldgerät entwickelt werden. Ein solches *Reduced-Order-Model* (ROM) ermöglicht es, den Strömungszustand und die zugehörige Partikelverteilung mit erheblich reduziertem Rechenaufwand vorherzusagen. Sogar im laufenden Betrieb könnte damit ggf. erkannt werden, ob das Feldgerät zu einem bestimmten Zeitpunkt unter gefährlichen Prozessbedingungen betrieben wird.

Zu diesem Zweck werden unterschiedliche Messdaten aus der Anlage, wie z.B. Druck, Temperatur, andere Daten des Fluids oder auch die Partikelbeladung und/oder Partikelgröße berücksichtigt. Auch bei veränderlichen Bedingungen (beispielsweise Anfahr- und Abschaltprozesse, Veränderung der Prozessgrößen oder allgemeine, zeitlich veränderliche Prozesse) kann dann immer sichergestellt werden, dass ein Betrieb des Feldgerätes unter kritischen Bedingungen nicht unbemerkt bleibt und bei Gefahr unterbrochen werden kann.

Für Prozesse mit sauerstoffhaltigen Fluiden ist es von Vorteil, wenn aus den berechneten Einschlagenergien Stellen und/oder Bauteile des Feldgerätes ermittelt werden, die bei sauerstoffhaltigen Fluiden einem erhöhten Zündrisiko ausgesetzt sind. Dies äußert sich darin, dass es durch die ermittelten Einschlagenergien und z.B. die Wärmeleiteigenschaften des Materials der Bauteile des Feldgerätes zu lokalen Erwärmungen kommen kann, die innerhalb eines vorgegebenen Sicherheitsabstandes zu einer Zündtemperatur liegen. Sollten solche Stellen und/oder Bauteile ermittelt werden, kann - neben anderen Sicherheitsmaßnahmen - ein Austausch dieser Bauteile gegen solche aus sichererem Material (z.B. Monel) oder gegen an den kritischen Stellen verstärkte Bauteile vorgenommen werden. Ebenso können auf diese Weise Bauteile ermittelt werden, die - möglicherweise entgegen bisheriger Praxis - im Hinblick auf erreichte Temperaturen unkritisch sind und daher zukünftig nicht aus besonderem Material gefertigt werden müssen. Die Konstruktion des Feldgerätes kann auf diese Weise optimiert werden.

Vorteilhaft ist es ferner, wenn bei Auftreten von berechneten Einschlagenergien, die eine vorgegebenen Schwelle überschreiten, Sicherheitsmaßnahmen eingeleitet werden. Dies kann z.B. eine optische und/oder akustische Warnung vor kritischen Betriebszuständen sein, und/oder die Drosselung eines Zuflusses, oder ggf. sogar das Auslösen einer Prozessunterbrechung.

Die Aufgabe wird ferner gelöst durch ein System zur Lebensdaueranalyse eines Feldgerätes, das von einem Fluid durchströmt wird, wobei das Fluid Feststoffpartikel mit sich führt. Das System weist Sensormittel zum Bestimmen von Durchflussmenge und Geschwindigkeiten der Feststoffpartikel auf sowie eine Recheneinheit mit einem digitalen Modell zur Vorhersage des Verschleißes am Feldgerät. Die Recheneinheit berechnet die Geschwindigkeiten der Feststoffpartikel mittels numerischer Strömungsmechanik und ermittelt daraus ihre Einschlagenergien auf ein Teil des Feldgeräts. Das Modell berücksichtigt Einschlagenergien der Feststoffpartikel. Die Recheneinheit ermittelt anhand des Modells eine Prognose für die Lebensdauer und/oder den Verschleiß des Feldgerätes ermittelt. Das System weist außerdem Ausgabemittel zum Ausgeben der ermittelten Prognose für die Lebensdauer und/oder den Verschleiß des Feldgerätes auf.

Mit diesem System kann besser berücksichtigt werden, in welcher Weise sich im Fluid mitgeführte Feststoffpartikel auf den Verschleiß bzw. die Lebensdauer eines Feldgerätes auswirken. Insbesondere wird auch berücksichtigt, wie sich Änderungen des Gehalts an Feststoffpartikeln sowie Änderungen der Fluidströmung auswirken. Dadurch ergeben sich zuverlässigere Einschätzungen über erforderliche Wartungsmaßnahmen, wodurch Kosten gespart werden können und z.B. ein unterbrechungsfreier Betrieb leichter ermöglicht werden kann.

Dadurch, dass mindestens ein Sensormittel zum Bestimmen von Durchflussmenge und Geschwindigkeiten der Feststoffpartikel stromaufwärts des Feldgerätes angeordnet ist, können Daten über die Feststoffpartikel, die von der Fluidströmung in das Feldgerät hinein befördert werden, aufgenommen werden.

Dadurch, dass mindestens ein Sensormittel zum Bestimmen von Durchflussmenge und Geschwindigkeiten der Feststoffpartikel stromabwärts des Feldgerätes angeordnet ist, können Daten über die Feststoffpartikel, die von der Fluidströmung aus dem Feldgerät heraus befördert werden, aufgenommen werden.

Bei Verwendung von Partikelsensoren sowohl im Einlass- als auch im Auslassbereich kann auf folgende Sachverhalte geschlossen werden:
Ist die gemessene Partikeldichte im Einlass größer als im Auslass, so ist mit einem Materialauftrag auf spezifische Bauteile im Inneren des Feldgerätes zu rechnen. Handelt es sich bei dem Feldgerät um ein Stellventil, so könnte sich der Durchlass reduzieren, sodass der gewünschte KV-Wert nicht mehr erreicht wird. Ein solcher Materialauftrag könnte außerdem zum Verkleben bzw. Klemmen des Stellgliedes des Stellventils führen, wodurch ein sicherer Betrieb nicht mehr gewährleistet wäre. Mittels CFD-Simulationen und z.B. der CAD-Daten des Stellventils können die Stellen, an denen ein Materialauftrag besonders wahrscheinlich ist, ermittelt werden.

Sind sowohl im Einlass- als auch im Auslassbereich zusätzlich noch Drucksensoren vorhanden, kann der prognostizierte Materialauftrag mit der Veränderung der Druckdifferenzen verglichen werden: Je größer eine Materialablagerung im Stellventil ist, desto höher wird auch die Druckdifferenz zwischen den Messstellen im Einlass- und Auslassbereich. Dieser Effekt kann genutzt werden, um den aufgrund der Messungen der Partikelsensoren prognostizierten Materialauftrag zu verifizieren und mittels Korrekturfaktoren die Prognosen weiter zu verbessern. Hierbei können auch zusätzlich extern gewonnene Daten, z.B. aus Laboruntersuchungen, genutzt werden, beispielsweise um den Zusammenhang zwischen Materialablagerungen im Ventil und Veränderungen der Druckdifferenz zwischen Einlass und Auslass genauer festzulegen.

Ist hingegen die Partikeldichte im Einlass kleiner als im Auslass, so ist mit einer abrasiven Wirkung durch die Feststoffpartikel im Fluid zu rechnen. Bestimmte Bereiche im Feldgerät verlieren also an ihrer Oberfläche Material. Ist das Feldgerät z.B. ein Stellventil und werden bei geschlossenem Ventilglied signifikante Partikelbewegungen im Auslass detektiert, so ist das Dichtschließen wohl nicht mehr gewährleistet. Ein konstanter Eingangsdruck bei geschlossenem Ventilglied, aber über die Zeit mehr Partikelbewegung im Auslass, kann die Folge größeren Verschleißes am Ventilsitz sein, sodass ein Dichtschließen nicht erfolgt. Auch an der Druckdifferenz zwischen Einlass und Auslass würde sich ein solcher Verschleiß bemerkbar machen.

Vorzugswiese sind die Sensormittel zum Bestimmen von Durchflussmenge und Geschwindigkeiten der Feststoffpartikel ausgewählt aus Ultraschallsensoren, optischen Sensoren, induktiven Sensoren und kapazitiven Sensoren. Ultraschallsensoren können z.B. die Partikeldichte aus der Dämpfung eines Ultraschallsignals erkennen. Optische Sensoren ermöglichen z.B. besonders gut die Bestimmung der Partikelgröße (aus Reflexion und Streuung). Induktive und kapazitive Sensoren eignen sich hingegen vor allem zur Erfassung von Metallpartikeln.

Auch eine Kombination von Ultraschallsensoren und optischen Sensoren ist denkbar. Mittels der Ultraschallsensoren kann im Gegensatz zu optischen Sensoren besser die Gesamtdichte der Feststoffpartikel im Fluid ermittelt werden.

Vorteilhaft ist zudem, wenn mindestens ein Elektromagnet vorhanden ist, um den Gehalt an magnetischen Feststoffpartikeln im Fluid zu bestimmen. Diese Partikel können durch den Elektromagneten angezogen werden, so dass z.B. das Gewicht oder das Volumen einer Ansammlung dieser Partikel periodisch bestimmt werden kann. Es ist zweckmäßig, derartige Partikelansammlungen am Elektromagneten entweder periodisch zu entfernen, oder sie durch kurzzeitiges Abschalten des Elektromagneten wieder freizusetzen, so dass sie durch das Fluid weggespült werden können.

Elektromagnete können im Einlass- und/oder im Auslassbereich des Feldgerätes platziert sein. Zumindest magnetische Metallpartikel, welche z.B. aufgrund von Verschleiß in der Prozessanlage entstehen, können mittels Magneten separiert werden. Die Dichte solcher Partikel, welche an dem Magneten anhaften, kann z.B. induktiv erfasst werden. Ein Vergleich zwischen der Partikeldurchflussmenge im Einlass- und im Auslassbereich lässt erkennen, ob solcher Verschleiß an diesem Feldgerät stattfindet. Mittels des Elektromagneten können die Metallpartikel z.B. periodisch gesammelt und/oder wieder freigegeben werden.

Eine weniger bevorzugte Alternative ist ein Dauermagnet an Stelle des Elektromagneten. Dieser müsste von Zeit zu Zeit mechanisch gereinigt werden, da angesammelte Metallpartikel nicht wieder freigegeben werden können. Die eigentliche Detektion der Metallpartikel kann - alternativ zur induktiven Erfassung - auch kapazitiv erfolgen.

Die Aufgabe wird ferner gelöst durch ein System, wie es soeben beschrieben wurde, mit Mitteln, die geeignet sind, die Schritte des Verfahrens, wie sie weiter oben beschrieben wurden, auszuführen.

Die Aufgabe wird außerdem gelöst durch ein Computerprogramm, umfassend Befehle, die bewirken, dass das oben genannte System die weiter oben beschriebenen Verfahrensschritte ausführt.

Die Aufgabe wird schließlich gelöst durch ein computerlesbares Medium, auf dem das vorgenannte Computerprogramm gespeichert ist.

Weitere Einzelheiten und Merkmale ergeben sich aus der nachfolgenden Beschreibung eines bevorzugten Ausführungsbeispiels in Verbindung mit den Figuren. Hierbei können die jeweiligen Merkmale für sich alleine oder zu mehreren in Kombination miteinander verwirklicht sein. Die Möglichkeiten, die Aufgabe zu lösen, sind nicht auf das Ausführungsbeispiel beschränkt.

Ein Ausführungsbeispiel ist in den Figuren schematisch dargestellt. Gleiche Bezugsziffern in den einzelnen Figuren bezeichnen dabei gleiche oder funktionsgleiche bzw. hinsichtlich ihrer Funktionen einander entsprechende Elemente. Im Einzelnen zeigt:
- Fig. 1: eine schematische Schnittansicht durch eine Rohrleitung mit einem Feldgerät mit stromaufwärts und stromabwärts angeordneten Sensoren; und
- Fig. 2: eine Darstellung von Partikelbahnen an einem Feldgerät, wobei die Partikelbahnen mittels numerischer Strömungssimulation bestimmt wurden.

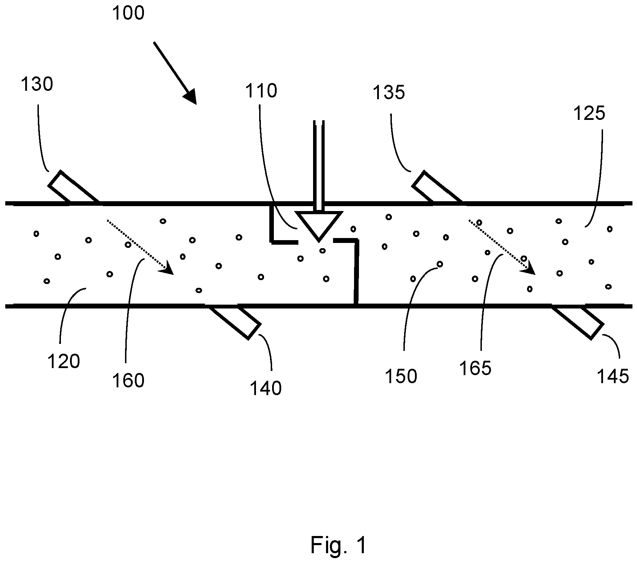

Fig. 1 zeigt eine Rohrleitung 100 mit einem Stellventil als Feldgerät 110. Sowohl im Zulauf 120 zum Feldgerät als auch im Ablauf 125 vom Feldgerät sind jeweils Sender bzw. Sensoren zum Messen der Transmission eines Ultraschallsignals durch das Fluid angeordnet. In diesem konkreten Ausführungsbeispiel sind diese Einrichtungen zum Messen der Transmission eines Ultraschallsignals durch jeweils einen Ultraschall-Sender/Empfänger 130, 135 sowie einen gegenüber angeordneten Ultraschall-Sender/Empfänger 140, 145 verwirklicht, die in bekannter Weise Durchflussmenge und Geschwindigkeit der Feststoffpartikel messen können. Es sind selbstverständlich auch andere Konfigurationen zum Messen der Transmission eines Ultraschallsignals durch das Fluid vorstellbar.

Im Fluid mitgeführte Feststoffpartikel 150 schwächen die Transmission der Ultraschallsignals 160 im Zulauf 120 des Feldgerätes und des Ultraschallsignals 165 im Ablauf 125 des Feldgerätes ab. Abhängig von der Abschwächung der Ultraschallsignale 160, 165 kann so in bekannter Weise der Gehalt des Fluids an Feststoffpartikeln 150 ermittelt werden. Bei der in Fig. 1 vorliegenden Anordnung kann insbesondere auch bestimmt werden, ob sich der Gehalt an Feststoffpartikeln zwischen Zulauf 120 und Ablauf 125 unterscheidet, was auf eine Partikelanlagerung oder einen Partikelabtrag im Inneren des Feldgerätes 110 hinweist.

Der oder die Ultraschallsensoren werden vorzugsweise mit einem reinen Testfluid, d.h. ohne Partikeleinfluss, kalibriert. Mit Ultraschallsensoren kann sowohl die Strömungsgeschwindigkeit des Fluids als auch auf die Dichte von Feststoffpartikeln bestimmt werden. Die Signalstärke eines Ultraschallsenders wird mit der durch einen Empfänger erhaltenen Signalstärke verglichen. Je mehr Feststoffpartikel sich im Fluid befinden, umso stärker wird das Ultraschallsignal gedämpft. In Flüssigkeiten ohne Feststoffanteil breitet sich Ultraschall dagegen dämpfungsarm aus.

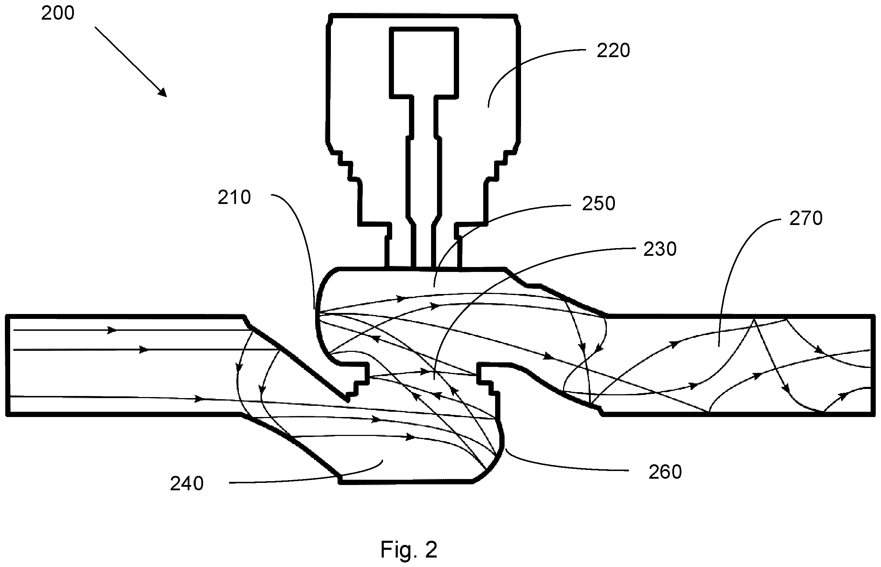

Fig. 2 zeigt beispielhaft eine Darstellung von drei exemplarischen Partikelbahnen an einem Feldgerät 200, wobei die Partikelbahnen mittels numerischer Strömungssimulation bestimmt wurden. Bei dem Feldgerät 200 handelt es sich um ein Stellventil mit einem Ventilkörper 210 und einem Antrieb 220. Der eigentliche Ventilsitz mit dem Ventilkegel befindet sich an der Position 230, wurde der besseren Übersicht wegen aber nicht dargestellt.

Hier lässt sich erkennen, dass an verschiedenen Stellen unterschiedliche Geschwindigkeiten und Auftreffwinkel vorkommen. Die dadurch ermittelten Aufschlagenergien der Partikel auf die Innenwand des Feldgerätes führen zu unterschiedlichen und unterschiedlich starken Verschleißerscheinungen. Im Einlassbereich 240 und im Auslassbereich 250 des Ventilkörpers 210 sowie dazwischen finden die größten Richtungsänderungen statt. Im Einlassbereich 240 des Ventilkörpers 210 treten zudem die niedrigsten Partikelgeschwindigkeiten auf. Somit ist beispielsweise im Bereich um die Position 260 am ehesten mit Ablagerungen zu rechnen, die ggf. zu einer Verengung der Durchströmöffnung des Ventils führen oder verhindern könnten, dass es dicht schließt.

Die größten Partikelgeschwindigkeiten treten hingegen im Ablauf 270 des Ventils auf. Die dort vorkommenden Einschläge in die Wand erfolgen außerdem meist unter flacheren Winkeln. Dementsprechend ist in diesem Bereich am ehesten mit Materialabtrag zu rechnen, wodurch sich im ungünstigsten Fall die Wandstärke verringert. Zudem ist aufgrund der höheren Einschlagenergie der Partikel mit relativ hoher lokaler Erwärmung an Einschlagstellen zu rechnen. Korrosionsreaktionen oder sogar Zündvorgänge sind also am ehesten in diesem Bereich zu erwarten. Je nach Anwendung können für solche Bereiche besondere Materialien oder eine besonders intensive Überwachung vorgesehen werden.

### Lebensdauermodelle

Ein besonders einfaches Lebensdauermodell für ein Feldgerät kann z.B. dadurch erhalten werden, dass ein bekanntes Wartungsintervall als Ausgangswert genommen wird. Dieser wird mit einem Faktor versehen, der die jeweils momentan gemessene Durchflussmenge an Feststoffpartikeln im Fluid berücksichtigt. Mehr Feststoffpartikel bedeuten mehr Verschleiß und damit eine kürzere Lebensdauer. Auch die erwartete Partikelgröße kann berücksichtigt werden, wobei größere Partikel - wenn ihre sonstigen Eigenschaften unverändert bleiben - typischerweise einen höheren Verschleiß bewirken. Ebenso kann z.B. ein Mittelwert der mittels numerischer Strömungssimulation ermittelten Einschlagenergien als Faktor ergänzt werden. Auch hier gilt, dass ein höherer Wert einen höheren Verschleiß bedeutet.

Eine derartige Betrachtung kann selbstverständlich auch getrennt für jede einzelne Komponente des Feldgerätes vorgenommen werden. Dies kann weiter verfeinert werden, bis hin zu kleinen Einheiten der inneren Oberflächen des Feldgerätes, soweit es die zur Verfügung stehende Rechnerinfrastruktur zulässt. Die Einschlagenergien würden dann nur über die jeweils betrachtete Einheit der inneren Oberfläche des Feldgerätes gemittelt.

Werden Durchflussmenge und Geschwindigkeiten der Feststoffpartikel sowohl stromaufwärts als stromabwärts des Feldgerätes bestimmt und diese Werte miteinander verglichen, kann das Modell für jede betrachtete Einheit des Feldgerätes nicht nur einen erwarteten Lebensdauerwert beinhalten, sondern z.B. auch eine erwartete Wandstärke. Diese wird erhöht, wenn eine Partikelablagerung festgestellt wird, und erniedrigt, wenn ein Partikelabtrag festgestellt wird. Dabei wird eine Ablagerung eher dort angenommen, wo die Einschlagenergien der Feststoffpartikel niedrig sind, und ein Abtrag dort, wo die Einschlagenergien hoch sind. Der prognostizierte Wert für die Lebensdauer kann bei einem solchen Modell daraus bestimmt werden, wann die jeweilige erwartete Wandstärke bei Extrapolation ihrer momentanen Veränderung ein vorher festgelegtes Intervall verlässt.

Ein Lebensdauermodell kann eine Matrix verschiedener Einflussfaktoren beinhalten. Folgende Einflussfaktoren können beispielsweise zur Berechnung berücksichtigt werden:
- Partikelanzahl, Partikelgeschwindigkeit, Partikelgröße, Partikelart;
- Einschlagwinkel, Turbulenzen, korrigierte Einschlaggeschwindigkeit anhand von Strömungssimulationen (CFD);
- Materialbeschaffenheit der inneren Ventilkomponenten z.B. Härte und Werkstoff;
- Druckabbau im Fluid, Korrekturen des Abtrages bzw. der Ablagerungen;
- Kenndaten des Fluids;
- Temperatur, Korrekturfaktoren für Materialien im inneren des Stellventils, sowie Viskosität des Prozessfluid.

Alle Prozess- und Umweltdaten werden vorzugsweise korreliert und in einer Matrix erfasst sowie statistisch ausgewertet, woraus ein momentaner Partikelauftrag bzw. -abtrag berechnet wird. Anhand der Entwicklung des Partikelauftrages bzw. des -abtrages werden vorrausschauend für die Zukunft eine Entwicklung des Materialabtrages oder der Ablagerungen prognostiziert und anhand der gemessenen Daten in der Matrix korrigiert, wodurch ein selbstlernendes System geschaffen werden kann. Mittels der gemessenen Sensordaten werden also ständig Korrekturen am Modell zur Verbesserung der weiteren Prognosen vorgenommen.

### Situation bei sauerstoffhaltigen Fluiden

Zündvorgänge in Feldgeräten stellen bei Prozessen mit sauerstoffhaltigen Fluiden eine Gefahr dar. Für derartige Zündvorgänge sind Einschläge durch im Fluid mitgeführte Feststoffpartikel entscheidend, da sie durch die Einschlagenergie lokale Erwärmungen verursachen, die ggf. Zündtemperaturen überschreiten. Um dies zu vermeiden, sind - abhängig vom Druck im Fluid - zulässige lokale Strömungsgeschwindigkeiten definiert. Es ist bekannt, diese lokalen Strömungsgeschwindigkeiten durch Simulationen zu optimieren.

Die Verteilung der Partikel und die eigentliche Partikelgeschwindigkeit (und somit die Einschlagenergie) hängt jedoch stark von Größe und Dichte der Partikel ab. Daher ist es bei sauerstoffhaltigen Fluiden besonders vorteilhaft - wie beschrieben - das Verhalten der Partikel durch CFD-Simulationen zu bestimmen und realistischere Einschlagenergien zu erhalten. Dadurch kann die Lage in Bezug auf mögliche Zündvorgänge genauer bewertet werden, da folgende Daten gewonnen werden können:
- Verteilung und tatsächliche Geschwindigkeit der Partikel im Feldgerät;
- Einschlagwinkel und Einschlagort;
- Durch den Partikeleinschlag verursachter lokaler Energieeintrag in die Bauteilwände.

Neben der qualitativen Bewertung der Partikelbewegung im durchströmten Feldgerät kann ggf. unter Berücksichtigung der Bauteilwerkstoffe, der Partikelgröße und -dichte sowie der eingetragenen Energie eine genauere quantitative Risikobewertung des Feldgerätes erarbeitet werden. Dadurch kann z.B. die Auslegung des Feldgerätes optimiert werden, insbesondere dahingehend, ob und ggf. welche Bauteile verstärkt oder aus besonderem Material (z.B. Monel) gefertigt werden müssen. Derartige Verstärkungen können - je nach Genauigkeit der Simulationsergebnisse - auf besonders kritische Punkte beschränkt bleiben, falls sich die entsprechenden Bauteile in der optimierten Form fertigen lassen. Ggf. muss hierfür auf besondere Verfahren wie z.B. Metall-3D-Druck zurückgegriffen werden.

### Glossar

### Feldgerät

Ein Feldgerät ist eine technische Einrichtung im Bereich der Automatisierungstechnik, die mit einem Produktionsprozess in direkter Beziehung steht. "Feld" bezeichnet in der Automatisierungstechnik den Bereich außerhalb von Schaltschränken bzw. Leitwarten. Feldgeräte können somit sowohl Aktoren (Stellglieder, Ventile, Pumpen etc.) als auch Sensoren (z.B. Messumformer) in der Fabrik- und Prozessautomation sein.

### Fluid

Fluid ist eine gemeinsame Bezeichnung für Gase und Flüssigkeiten.

### Monel

Monel (Werkstoffnummer 2.4360, UNS N 04400, Alloy 400, Nicorros), auch Monelmetall genannt (nach Ambrose Monell, † 1921), ist eine Nickel-Kupfer-Legierung. Monel besteht aus ungefähr 65 % Nickel, 33 % Kupfer und 2 % Eisen mit hoher Zugfestigkeit. Es verhält sich sehr beständig gegenüber atmosphärischer Korrosion, Meerwasser und einer Vielzahl von Säuren und alkalischen Lösungen. Monel wird in der Schiffstechnik, für den Turbinenbau, für Ausrüstungen in der Chemie- und Kohlenwasserstoffindustrie, für Ventile, Pumpen und Wärmeübertrager verwendet. (Nach https://de.wikipedia.org/wiki/Monel.)

### Numerische Strömungssimulation

Die numerische Strömungssimulation (englisch Computational Fluid Dynamics, CFD) ist eine etablierte Methode der Strömungsmechanik. Sie hat das Ziel, strömungsmechanische Probleme approximativ mit numerischen Methoden zu lösen. Die benutzten Modellgleichungen sind meist die Navier-Stokes-Gleichungen, Euler-Gleichungen, Stokes-Gleichungen oder die Potentialgleichungen.

Das umfassendste Modell sind die Navier-Stokes-Gleichungen. Es handelt sich hierbei um ein System von nichtlinearen partiellen Differentialgleichungen 2. Ordnung. Insbesondere können mit Hilfe der Navier-Stokes-Gleichungen auch Turbulenz und hydrodynamische Grenzschichten berechnet werden, was allerdings zu höchsten Ansprüchen an Rechnerleistung, Speicher und die numerischen Verfahren führt.

Ein einfacheres Modell sind die Euler-Gleichungen, die aufgrund der vernachlässigten Reibung die Grenzschicht nicht abbilden und auch keine Turbulenz abbilden, womit beispielsweise ein Strömungsabriss nicht über dieses Modell simuliert werden kann. Dafür sind wesentlich gröbere Gitter geeignet, um die Gleichungen sinnvoll zu lösen. Für diejenigen Teile der Strömung, in denen die Grenzschicht keine wesentliche Rolle spielt, sind die Euler-Gleichungen sehr gut geeignet.

Die Potentialgleichungen schließlich sind vor allem nützlich, wenn schnell grobe Vorhersagen gemacht werden sollen. Bei ihnen wird die Entropie als konstant vorausgesetzt, was bedeutet, dass keine starken Schockwellen auftreten können, da an diesen die Entropie sogar unstetig ist. Weitere Vereinfachung über konstante Dichte führt dann zur Laplace-Gleichung.

Die verbreitetsten Lösungsmethoden der numerischen Strömungsmechanik sind
- Finite-Differenzen-Methode (FDM)
- Finite-Volumen-Methode (FVM)
- Finite-Elemente-Methode (FEM).

Die FEM ist für viele Probleme geeignet, insbesondere für elliptische und parabolische im inkompressiblen Bereich, weniger für hyperbolische. Sie zeichnet sich durch Robustheit und solide mathematische Untermauerung aus. FVM ist für Erhaltungsgleichungen geeignet, insbesondere für kompressible Strömungen. FDM ist sehr einfach und deswegen vor allem von theoretischem Interesse.

Weitere gebräuchliche Methoden sind
- Spektralmethode
- Lattice-Boltzmann-Methode (LBM)
- Smoothed Particle Hydrodynamics (SPH)
- Randelementmethode (boundary element method, BEM)
- Fast Multipole Method (FMM)
- Method of Fundamental Solutions (MFS)
- Finite-Punkte-Methode (FPM)
- Moving Particle Semi-Implicit Method (MPS)
- Fast Fluid Dynamics (FFD)
- Particle in Cell Method (PIC)
- Vortex in Cell Method (VIC)

Bei allen Methoden handelt es sich um numerische Näherungsverfahren, die zur Validierung mit quantitativen Experimenten verglichen werden müssen. Mit Ausnahme der partikelbasierten Methoden ist der Ausgangspunkt der oben genannten Methoden die Diskretisierung des Problems mit einem Rechengitter. (Nach https://de.wikipedia.org/wiki/Numerische_Str%C3%B6mungsmechanik.)

### Recheneinheit

Mit Recheneinheit wird eine Anlage oder Vorrichtung bezeichnet, die mittels programmierbarer Rechenvorschriften Daten verarbeitet. Gleichbedeutend sind die Begriffe Computer, Rechenanlage, Datenverarbeitungsanlage oder elektronische Datenverarbeitungsanlage. Oft handelt es sich bei einer solchen Anlage um einen PC (Personal Computer). Es kann sich jedoch auch um größere Anlagen handeln, die u.U. auch aus mehreren miteinander vernetzten Computern bestehen, ggf. auch in einer Client-Server-Architektur. Die Vernetzung muss auch nicht lokal sein ("Cloud"). Ebenso sind auch eingebettete Systeme gemeint, z.B. Einplatinen-Computer, DSPs, FPGAs, Mikrocontroller usw.

### Bezugszeichen

- 100: Rohrleitung mit Feldgerät
- 110: Feldgerät (Stellventil)
- 120: Zulauf zum Feldgerät
- 125: Ablauf vom Feldgerät
- 130, 135: Ultraschall-Sender
- 140, 145: Ultraschall-Empfänger
- 150: Feststoffpartikel
- 160, 165: Ultraschallsignal
- 200: Feldgerät
- 210: Ventilkörper
- 220: Antrieb
- 230: Position von Ventilsitz mit Ventilkegel
- 240: Einlassbereich des Ventilkörpers
- 250: Auslassbereich des Ventilkörpers
- 260: Position mit hoher Ablagerungswahrscheinlichkeit
- 270: Ablauf des Ventils

### zitierte Literatur

zitierte Patentliteratur
CN 113 567 108 A
CN 112 014 255 A
DE 10 2016 205 454 A1
DE 10 2017 101 567 A1
DE 10 2018 218 360 A1
EP 2 812 613 B1
EP 2 898 241 B1
EP 3 889 553 A1
M.A. VERSPUI ET AL.: "Simulation model for the erosion of brittle materials", WEAR, Bd. 233-235, 29. Dezember 1999 (1999-12-29), Seiten 436-443
US 2020/0386652 A1
US 6 837 681 B2

## Patentansprüche

1. Verfahren zur Lebensdaueranalyse eines Feldgerätes (110; 200), das von einem Fluid durchströmt wird, wobei das Fluid Feststoffpartikel (150) mit sich führt, mit den folgenden Schritten:
1.1 Bestimmen von Durchflussmenge und Geschwindigkeiten der Feststoffpartikel,
1.1.1 wobei die Geschwindigkeiten der Feststoffpartikel zumindest teilweise mittels numerischer Strömungsmechanik bestimmt werden;
**gekennzeichnet durch folgende Schritte:**
1.2 Berechnen von Einschlagenergien der Feststoffpartikel auf ein Teil des Feldgeräts aus ihren bestimmten Geschwindigkeiten;
1.3 Ermitteln einer Prognose für die Lebensdauer und/oder den Verschleiß des Feldgerätes;
1.3.1 wobei zum Ermitteln der Prognose ein digitales Modell zur Vorhersage des Verschleißes am Feldgerät genutzt wird;
1.3.2 wobei das Modell die Durchflussmenge und die berechneten Einschlagenergien der Feststoffpartikel berücksichtigt; und
1.4 Ausgeben der ermittelten Prognose für die Lebensdauer und/oder den Verschleiß des Feldgerätes.

2. Verfahren nach dem vorhergehenden Anspruch,
mit dem weiteren Schritt des Erstellens eines Datenträgers, auf dem die Prognose für die Lebensdauer und/oder den Verschleiß des Feldgerätes und/oder Parameter des Modells gespeichert sind.

3. Verfahren nach einem der vorhergehenden Ansprüche,
**dadurch gekennzeichnet,**
3.1 dass die Durchflussmenge und Geschwindigkeiten der Feststoffpartikel sowohl stromaufwärts als auch stromabwärts des Feldgerätes gemessen werden;
3.2 wobei die stromaufwärts und stromabwärts bestimmten Durchflussmengen miteinander verglichen werden;
3.3.1 wobei das Modell zur Vorhersage des Verschleißes am Feldgerät Materialablagerungen im Feldgerät berücksichtigt, wenn die stromabwärts des Feldgerätes bestimmte Durchflussmenge an Feststoffpartikeln kleiner als die stromaufwärts bestimmte Durchflussmenge an Feststoffpartikeln ist; und
3.3.2 wobei das Modell zur Vorhersage des Verschleißes am Feldgerät einen Materialabtrag im Feldgerät berücksichtigt, wenn die stromabwärts des Feldgerätes bestimmte Durchflussmenge an Feststoffpartikeln größer als die stromaufwärts bestimmte Durchflussmenge an Feststoffpartikeln ist.

4. Verfahren nach einem der vorhergehenden Ansprüche,
**dadurch gekennzeichnet,**
4.1 dass das Modell zusätzlich Größe und/oder Oberflächeneigenschaften und/oder Zusammensetzung der Feststoffpartikel berücksichtigt; und/oder
4.2 dass das Modell zusätzlich Einschlagwinkel und/oder Einschlagort der Feststoffpartikel berücksichtigt;
4.2.1 wobei diese Informationen aus der numerischen Strömungssimulation gewonnen werden; und/oder
4.3 dass das Modell zusätzlich Oberflächeneigenschaften der Komponenten im Inneren des Feldgerätes, insbesondere Werkstoff und Härte, berücksichtigt.

5. Verfahren nach einem der vorhergehenden Ansprüche,
**dadurch gekennzeichnet,**
5.1 dass ein Temperatursensor zur Messung der Temperatur des Fluids und/oder stromaufwärts und stromabwärts des Feldgerätes Drucksensoren bereitgestellt werden; und
5.2 dass das Modell zusätzlich Temperatur und/oder Viskosität und/oder den Druck des Fluids, insbesondere einen Druckabfall beim Durchfluss durch das Feldgerät, und/oder weitere Kenndaten des Fluids berücksichtigt.

6. Verfahren nach einem der vorhergehenden Ansprüche,
**dadurch gekennzeichnet,**
**dass** das Modell eine räumliche Gestalt des Feldgerätes berücksichtigt, um die wahrscheinlichsten Stellen des Feldgerätes, an denen sich Ablagerungen bilden können, zu ermitteln.

7. Verfahren nach dem unmittelbar vorhergehenden Anspruch,
**dadurch gekennzeichnet,**
7.1 dass das Modell aus dem zeitlichen Verlauf der Durchflussmenge und der berechneten Einschlagenergien der Feststoffpartikel Materialabtrag oder -ablagerung im Feldgerät berechnet;
7.2 dass Änderungen der räumlichen Gestalt des Feldgeräts, die sich aus dem berechneten Materialabtrag oder der berechneten Materialablagerung ergeben, bei der Strömungssimulation berücksichtigt werden;
7.3 wodurch sich ein rückgekoppeltes System ergibt.

8. Verfahren nach einem der vorhergehenden Ansprüche,
**dadurch gekennzeichnet,**
**dass** Verschleiß durch Einschlag und/oder Anlagerung und/oder Abtrag von Feststoffpartikeln im Feldgerät mittels Finite-Elemente-Methode simuliert wird.

9. Verfahren nach einem der vorhergehenden Ansprüche, mit den folgenden zusätzlichen Schritten:
9.1 Daten des Fluids und/oder Umweltdaten werden korreliert;
9.2 die Korrelationen werden statistisch ausgewertet;
9.3 aus der statistischen Auswertung wird ein momentaner Auftrag oder Abtrag von Feststoffpartikeln berechnet;
9.3.1 wobei aus dem momentanen Auftrag oder Abtrag von Feststoffpartikeln eine Prognose für die Lebensdauer und/oder den Verschleiß des Feldgerätes generiert wird.

10. Verfahren nach einem der vorhergehenden Ansprüche,
**dadurch gekennzeichnet,**
10.1 dass aus einer Mehrzahl von Simulationsergebnissen für die Strömung der Feststoffpartikel durch das Feldgerät und den zugehörigen Bedingungen stromaufwärts und stromabwärts des Feldgeräts eine Sammlung aufgebaut wird; und
10.2 dass zu vorgefundenen Bedingungen stromaufwärts und stromabwärts des Feldgeräts die Strömung der Feststoffpartikel durch das Feldgerät dadurch erhalten wird, dass ein Simulationsergebnis zu innerhalb einer vorgegebenen Toleranz übereinstimmenden Bedingungen aus der Sammlung herangezogen wird.

11. Verfahren nach einem der vorhergehenden Ansprüche,
**dadurch gekennzeichnet,**
**dass** aus einer Mehrzahl von Simulationsergebnissen für die Strömung der Feststoffpartikel ein vereinfachtes parametrisiertes Modell für die Strömung der Feststoffpartikel im Feldgerät erstellt wird.

12. Verfahren nach einem der vorhergehenden Ansprüche,
**dadurch gekennzeichnet,**
12.1 dass aus den berechneten Einschlagenergien Stellen und/oder Bauteile des Feldgerätes ermittelt werden, die bei sauerstoffhaltigen Fluiden einem erhöhten Zündrisiko ausgesetzt sind; und/oder
12.2 dass bei Auftreten von berechneten Einschlagenergien, die eine vorgegebene Schwelle überschreiten, Sicherheitsmaßnahmen eingeleitet werden.

13. System zur Lebensdaueranalyse eines Feldgerätes (110; 200), das von einem Fluid durchströmt wird, wobei das Fluid Feststoffpartikel (150) mit sich führt, mit
13.1 Sensormitteln (130, 135, 140, 145) zum Bestimmen von Durchflussmenge und Geschwindigkeiten der Feststoffpartikel;
13.2 einer Recheneinheit mit einem digitalen Modell zur Vorhersage des Verschleißes am Feldgerät;
13.2.1 wobei die Recheneinheit die Geschwindigkeiten der Feststoffpartikel mittels numerischer Strömungsmechanik berechnet;
**dadurch gekennzeichnet,**
13.2.2 dass die Recheneinheit aus den Geschwindigkeiten der Feststoffpartikel ihre Einschlagenergien auf ein Teil des Feldgeräts berechnet;
13.2.3 dass das Modell die Durchflussmenge und die berechneten Einschlagenergien der Feststoffpartikel berücksichtigt;
13.2.4 dass die Recheneinheit anhand des Modells eine Prognose für die Lebensdauer und/oder den Verschleiß des Feldgerätes ermittelt; und mit
13.3 Ausgabemitteln zum Ausgeben der ermittelten Prognose für die Lebensdauer und/oder den Verschleiß des Feldgerätes.

14. System nach dem unmittelbar vorhergehenden Anspruch,
**dadurch gekennzeichnet,**
**dass** mindestens ein Sensormittel (130, 135, 140, 145) zum Bestimmen von Durchflussmenge und Geschwindigkeiten der Feststoffpartikel (150) stromaufwärts und/oder stromabwärts des Feldgerätes (110; 200) angeordnet ist.

15. System nach einem der vorhergehenden Systemansprüche,
**dadurch gekennzeichnet,**
**dass** mindestens ein Elektromagnet vorhanden ist, um den Gehalt an magnetischen Feststoffpartikeln (150) im Fluid zu bestimmen.

16. System nach einem der vorhergehenden Systemansprüche,
mit Mitteln, die geeignet sind, die Schritte des Verfahrens nach einem der Verfahrensansprüche auszuführen.

17. Computerprogramm, umfassend Befehle, die bei der Ausführung des Programms durch den Computer bewirken, dass das System nach dem unmittelbar vorhergehenden Anspruch die Verfahrensschritte nach einem der Verfahrensansprüche ausführt.

18. Computerlesbares Medium, auf dem das Computerprogramm nach dem unmittelbar vorhergehenden Anspruch gespeichert ist.

## Claims

1. A Method for analysing the service life of a field device (110; 200) through which a fluid flows, the fluid carrying solid particles (150), comprising the following steps:
1.1 determining the flow rate and velocities of the solid particles,
1.1.1 wherein the velocities of the solid particles are determined at least partially by means of numerical fluid mechanics;
**characterised by the following steps:**
1.2 calculating impact energies of the solid particles on a part of the field device from their determined velocities;
1.3 determining a prediction for the service life and/or wear of the field device;
1.3.1 wherein a digital model for predicting wear on the field device is used to determine the prediction;
1.3.2 wherein the model takes into account the flow rate and the calculated impact energies of the solid particles; and
1.4 outputting the determined prediction for the service life and/or wear of the field device.

2. A method according to the preceding claim,
with the further step of creating a data carrier on which the prediction for the service life and/or the wear of the field device and/or parameters of the model are stored.

3. A method according to one of the preceding claims,
**characterised in that**
3.1 the flow rate and velocities of the solid particles are measured both upstream and downstream of the field device;
3.2 wherein the flow rates determined upstream and downstream are compared with each other;
3.3.1 wherein the model for predicting wear on the field device takes into account material deposition in the field device if the flow rate of solid particles determined downstream of the field device is less than the flow rate of solid particles determined upstream; and
3.3.2 wherein the model for predicting wear on the field device takes into account material removal in the field device if the flow rate of solid particles determined downstream of the field device is greater than the flow rate of solid particles determined upstream.

4. A method according to one of the preceding claims,
**characterised in that**
4.1 the model additionally takes into account size and/or surface properties and/or composition of the solid particles; and/or
4.2 the model additionally takes into account impact angle and/or impact location of the solid particles;
4.2.1 wherein this information is obtained from the numerical flow simulation; and/or
4.3 the model additionally takes into account surface properties of the components inside the field device, in particular material and hardness.

5. A method according to one of the preceding claims,
**characterised in that**
5.1 a temperature sensor for measuring the temperature of the fluid and/or pressure sensors upstream and downstream of the field device are provided; and
5.2 the model additionally takes into account temperature and/or viscosity and/or the pressure of the fluid, in particular a pressure drop during flow through the field device, and/or further characteristic data of the fluid.

6. A method according to one of the preceding claims,
**characterised in that**
the model takes into account a spatial shape of the field device in order to determine the most probable locations of the field device where deposits may form.

7. A method according to the immediately preceding claim,
**characterised in that**
7.1 the model calculates material removal or deposition in the field device from the temporal course of the flow rate and of the calculated impact energies of the solid particles;
7.2 changes in the spatial shape of the field device resulting from the calculated material removal or the calculated material deposition are taken into account in the flow simulation;
7.3 resulting in a feedback system.

8. A method according to one of the preceding claims,
**characterised in that**
wear due to impact and/or deposition and/or removal of solid particles in the field device is simulated by means of the finite element method.

9. A method according to one of the preceding claims, comprising the following additional steps:
9.1 data of the fluid and/or environmental data are correlated;
9.2 the correlations are statistically evaluated;
9.3 an instantaneous deposition or removal of solid particles is calculated from the statistical evaluation;
9.3.1 wherein a prediction for the service life and/or wear of the field device is generated from the instantaneous deposition or removal of solid particles.

10. A method according to one of the preceding claims,
**characterised in that**
10.1 a collection is built up from a plurality of simulation results for the flow of the solid particles through the field device and the associated conditions upstream and downstream of the field device; and
10.2 the flow of the solid particles through the field device is obtained for conditions found upstream and downstream of the field device by using a simulation result from the collection for conditions matching within a predetermined tolerance.

11. A method according to one of the preceding claims,
**characterised in that**
a simplified parameterised model for the flow of the solid particles in the field device is created from a plurality of simulation results for the flow of the solid particles.

12. A method according to one of the preceding claims,
**characterised in that**
12.1 the calculated impact energies are used to determine locations and/or components of the field device which are exposed to an increased ignition risk in the case of oxygen-containing fluids; and/or
12.2 safety measures are initiated when calculated impact energies occur which exceed a predetermined threshold.

13. A system for analysing the service life of a field device (110; 200) through which a fluid flows, the fluid carrying solid particles (150), comprising
13.1 sensor means (130, 135, 140, 145) for determining the flow rate and velocities of the solid particles;
13.2 a computing unit having a digital model for predicting the wear on the field device;
13.2.1 wherein the computing unit calculates the velocities of the solid particles by means of numerical fluid mechanics;
**characterised in that**
13.2.2 the computing unit calculates their impact energies on a part of the field device from the velocities of the solid particles;
13.2.3 the model takes into account the flow rate and the calculated impact energies of the solid particles;
13.2.4 the computing unit uses the model to determine a prediction for the service life and/or wear of the field device; and having
13.3 output means for outputting the determined prediction for the service life and/or wear of the field device.

14. A system according to the immediately preceding claim,
**characterised in that**
at least one sensor means (130, 135, 140, 145) for determining the flow rate and velocities of the solid particles (150) is arranged upstream and/or downstream of the field device (110; 200).

15. A system according to one of the preceding system claims,
**characterised in that**
at least one electromagnet is present in order to determine the content of magnetic solid particles (150) in the fluid.

16. A system according to one of the preceding system claims
having means suitable for performing the steps of the method according to one of the method claims.

17. A computer program comprising instructions which, when the program is executed by the computer, cause the system according to the immediately preceding claim to perform the method steps according to any one of the method claims.

18. A computer-readable medium on which the computer program according to the immediately preceding claim is stored.

## Revendications

1. Procédé d'analyse de la durée de vie d'un engin (110 ; 200) traversé par un fluide dans lequel le fluide entraîne des particules solides (150), comprenant les étapes suivantes :
1.1 détermination du débit et des vitesses des particules solides,
1.1.1 dans lequel les vitesses des particules solides sont déterminées au moins partiellement au moyen de la mécanique des fluides numérique ;
**caractérisé par les étapes suivantes :**
1.2 calculer les énergies d'impact des particules solides sur une partie de l'engin à partir de leurs vitesses déterminées ;
1.3 déterminer un pronostic pour la durée de vie et/ou l'usure de l'engin ;
1.3.1 dans lequel, pour déterminer le pronostic, on utilise un modèle numérique pour prédire l'usure de l'engin ;
1.3.2 dans lequel le modèle prend en compte le débit et les énergies d'impact calculées des particules solides ; et
1.4 délivrer la prévision déterminée pour la durée de vie et/ou l'usure de l'engin.

2. Procédé selon la revendication précédente,
comprenant l'étape supplémentaire consistant à créer un support de données sur lequel sont stockés la prévision de la durée de vie et/ou de l'usure de l'engin et/ou des paramètres du modèle.

3. Procédé selon l'une quelconque des revendications précédentes,
**caractérisé en ce**
3.1 que le débit et les vitesses des particules solides sont mesurés à la fois en amont et en aval de l'engin ;
3.2 dans lequel les débits déterminés en amont et en aval sont comparés entre eux ;
3.3.1 dans lequel le modèle de prédiction de l'usure de l'engin tient compte des dépôts de matière dans l'engin lorsque le débit de particules solides déterminé en aval de l'engin est inférieur au débit de particules solides déterminé en amont ; et
3.3.2 dans lequel le modèle de prédiction de l'usure de l'engin tient compte de l'enlèvement de matière dans l'engin lorsque le débit de particules solides déterminé en aval de l'engin est supérieur au débit de particules solides déterminé en amont.

4. Procédé selon l'une quelconque des revendications précédentes,
**caractérisé en ce**
4.1 que le modèle tient compte en outre de la taille et/ou des propriétés de surface et/ou de la composition des particules solides ; et/ou
4.2 que le modèle tient compte en outre de l'angle d'impact et/ou du lieu d'impact des particules solides ;
4.2.1 dans lequel ces informations sont obtenues à partir de la simulation des fluides numérique ; et/ou
4.3 que le modèle tient compte en outre des propriétés de surface des composants à l'intérieur de l'engin, notamment du matériau et de la dureté.

5. Procédé selon l'une des revendications précédentes,
**caractérisé en ce**
5.1 qu'un capteur de température est fourni pour mesurer la température du fluide et/ou des capteurs de pression sont fournis en amont et en aval de l'engin ; et
5.2 que le modèle prend en outre en compte la température et/ou la viscosité et/ou la pression du fluide, en particulier une chute de pression lors du flux à travers l'engin, et/ou d'autres données caractéristiques du fluide.

6. Procédé selon l'une quelconque des revendications précédentes,
**caractérisé en ce**
**que** le modèle prend en compte une configuration spatiale de l'engin afin de déterminer les endroits les plus probables de l'engin où des dépôts peuvent se former.

7. Procédé selon la revendication immédiatement précédente,
**caractérisé en ce**
7.1 que le modèle calcule l'érosion ou le dépôt de matière dans l'engin à partir de l'évolution dans le temps du débit et des énergies d'impact calculées des particules solides ;
7.2 en ce que les modifications de la forme spatiale de l'engin, qui résultent de l'enlèvement ou du dépôt de matière calculé, sont prises en compte dans la simulation des fluides ;
7.3 ce qui permet d'obtenir un système à rétroaction.

8. Procédé selon l'une des revendications précédentes,
**caractérisé en ce**
**que** l'usure due à l'impact et/ou au dépôt et/ou à l'enlèvement de particules solides dans l'engin est simulée au moyen de la méthode des éléments finis.

9. Procédé selon l'une des revendications précédentes, comprenant les étapes supplémentaires suivantes :
9.1 des données du fluide et/ou des données environnementales sont corrélées ;
9.2 les corrélations sont évaluées statistiquement ;
9.3 à partir de l'évaluation statistique, on calcule un dépôt ou un enlèvement instantané de particules solides ;
9.3.1 dans lequel, à partir du dépôt ou de l'enlèvement instantané de particules solides, on génère un pronostic pour la durée de vie et/ou l'usure de l'engin.

10. Procédé selon l'une des revendications précédentes,
**caractérisé en ce**
10.1 qu'une collection est établie à partir d'une pluralité de résultats de simulation pour l'écoulement des particules solides à travers l'engin et les conditions associées en amont et en aval de l'engin ; et
10.2 que, pour les conditions trouvées en amont et en aval de l'engin, l'écoulement des particules solides à travers l'engin est obtenu par l'utilisation d'un résultat de simulation pour des conditions coïncidant à l'intérieur d'une tolérance prédéfinie à partir de la collection.

11. Procédé selon l'une quelconque des revendications précédentes,
**caractérisé en ce**
**qu'**un modèle paramétré simplifié pour l'écoulement des particules solides dans l'engin est créé à partir d'une pluralité de résultats de simulation pour l'écoulement des particules solides.

12. Procédé selon l'une quelconque des revendications précédentes,
**caractérisé en ce**
12.1 que, à partir des énergies d'impact calculées, on détermine des endroits et/ou des composants de l'engin qui sont exposés à un risque d'inflammation accru en présence de fluides contenant de l'oxygène ; et/ou
12.2 que des mesures de sécurité sont prises en cas d'apparition d'énergies d'impact calculées qui dépassent un seuil prédéfini.

13. Système d'analyse de la durée de vie d'un engin (110 ; 200) traversé par un fluide dans lequel le fluide transporte des particules solides (150), avec
13.1 des moyens de détection (130, 135, 140, 145) pour déterminer le débit et les vitesses des particules solides ;
13.2 une unité de calcul avec un modèle numérique pour prédire l'usure de l'engin ;
13.2.1 dans lequel l'unité de calcul calcule les vitesses des particules solides au moyen de la mécanique des fluides numérique ;
**caractérisé en ce**
13.2.2 que l'unité de calcul calcule, à partir des vitesses des particules solides, leurs énergies d'impact sur une partie de l'engin ;
13.2.3 que le modèle tient compte du débit et des énergies d'impact calculées des particules solides ;
13.2.4 que l'unité de calcul détermine, à l'aide du modèle, un pronostic pour la durée de vie et/ou l'usure de l'engin ; et avec
13.3 des moyens de délivrance pour délivrer le pronostic déterminé pour la durée de vie et/ou l'usure de l'engin de terrain.

14. Système selon la revendication immédiatement précédente,
**caractérisé en ce**
**qu'**au moins un moyen de détection (130, 135, 140, 145) est disposé en amont et/ou en aval de l'engin (110 ; 200) pour déterminer le débit et les vitesses des particules solides (150).

15. Système selon l'une des revendications précédentes,
**caractérisé en ce**
**qu'**au moins un électroaimant est présent pour déterminer la quantité de particules solides magnétiques (150) dans le fluide.

16. Système selon l'une des revendications précédentes,
comprenant des moyens aptes à mettre en œuvre les étapes du procédé selon l'une quelconque des revendications de procédé.

17. Programme d'ordinateur comprenant des instructions qui, lors de l'exécution du programme par l'ordinateur, amènent le système selon la revendication immédiatement précédente à exécuter les étapes du procédé selon l'une quelconque des revendications de procédé.

18. Support lisible par ordinateur sur lequel est stocké le programme d'ordinateur selon la revendication immédiatement précédente.
